# EUROPEAN PATENT SPECIFICATION

(11) **EP 0 836 824 B1**
(45) Date of publication and mention of the grant of the patent: **03.07.2002**
(21) Application number: 97250383.3
(22) Date of filing: 19.11.1993
(51) Int. Cl.: A47K 5/12, F04B 9/14, B65B 31/04

(54) **Method of evacuation**
Evakuierungsmethode
Méthode d'évacuation

(30) Priority: 23.11.1992 US 980208
(43) Date of publication of application: 22.04.1998
(62) Divisional of application: 94900029.3
(73) Proprietor: HYGIENE-TECHNIK INC., Beamsville, Ontario L0R 1B0 (CA)
(72) Inventor: Ophardt, Heiner, Vineland, Ontario LOR 2CO (CA)
(74) Representative: Weisse, Jürgen, Dipl.-Phys.

(56) References cited:
- EP-A- 0 207 715
- EP-A- 0 242 253
- EP-A- 0 446 513
- WO-A-93/22200
- DE-A- 2 513 766
- FR-A- 2 365 997
- US-A- 4 142 645
- US-A- 5 121 590
- US-A- 5 165 577

## Description

### SCOPE OF THE INVENTION

This invention relates generally to a method of evacuating air from fluid filled containers and, more particularly, to a method of evacuating air from containers through a pump mechanism which can later be used to dispense fluid.

### BACKGROUND OF THE INVENTION

Many pump assemblies are known for dispensing liquids such as hand soap from fluid reservoirs, particularly, replaceable reservoirs. In the use of such replaceable fluid reservoirs, in many instances, the presence of a gas such as air in the reservoir can lead to difficulties in dispensing fluid from the reservoir particularly in reservoirs carrying pump assemblies to dispense fluid from the reservoir.

US-A-4142645 discloses a method for evacuating a vessel containing foodstuff and for thereafter maintaining vacuum pressure within the vessel. The vessel is provided with a nipple assembly comprising a short tubular member having a bore forming a frusto-conical valve seat of elastomeric material for a valve body in the form of a ball. The ball normally rests loosely on the valve seat. When the interior of the vessel is vacuumized, this causes the ball to sink into the elastomeric material of the valve seat, thus establishing a seal. After the vessel has been filled with foodstuff, the vessel is closed and heated in accordance with known canning procedure. During heating, expansion of the contents forces air outwardly through the bore of the tubular member, the ball rising from its seat to permit passage of air. The tubular member can be connected by means of a flexible tube to a source of sub-atmospheric air pressure for vessel evacuation purposes.

### SUMMARY OF THE INVENTION

To at least partially overcome these disadvantages, the present invention as defined by the appended claims provides a method of evacuating gas such as air from a replaceable reservoir which carries a one-way valve through which fluid may be dispensed, more preferably, with the one-way valve as part of a pump assembly which when activated dispenses fluid from the reservoir. The one-way valve is provided to permit air to flow therepast under vacuum pressure further below atmospheric pressure than a first negative pressure and to permit the fluid to flow therepast under vacuum pressure further below atmospheric pressure than a second negative pressure which second negative pressure is further below atmospheric pressure than said first negative pressure. The method comprises the steps of substantially filling the reservoir with fluid and evacuating air from the reservoir by applying a vacuum across said one-way valve between the first negative pressure and the second negative pressure.

Preferably, the one-way valve is an element of a pump assembly coupled to the reservoir and replaceable therewith which includes a chamber forming element in communication with the reservoir and with the one-way valve means disposed across the chamber.

The present invention provides a method of preparing a replaceable fluid reservoir wherein said reservoir has coupled thereto an a assembly including,
a chamber-forming element having a chamber, said chamber having chamber wall, an outer open end and an inner end in fluid communication with said reservoir, and
one-way valve means disposed across said chamber permitting fluid flow therepast through the chamber only from the reservoir outwardly towards the outer open end, said one-way valve means only permitting air to be drawn outwardly therepast towards the outer open end under vacuum pressure across the one-way valve means further below atmospheric pressure than a first negative pressure and only permitting fluid to be drawn outwardly therepast under vacuum pressure across the one-way valve means further below atmospheric pressure than a second negative pressure, the second negative pressure being further below atmospheric pressure than said first negative pressure,
said method comprising the steps of:
   substantially filling said reservoir with fluid, and evacuating air from said reservoir by applying a vacuum from an external source of vacuum to a portion of said chamber which is spaced outwardly from said one-way valve means,
   said vacuum providing vacuum pressure across the one-way valve means between said first negative pressure and said second negative pressure.

Preferred embodiments are defined by the dependent claims.

### BRIEF DESCRIPTION OF THE DRAWINGS

Further objects and advantages of the invention will appear from the following description taken together with the accompanying drawings in which:
Figure 1 is a partially cut away side view of a first preferred embodiment of a liquid dispenser with the reservoir and pump assembly for the performance of the method;
Figure 2 is a partial cross-sectional side view of the dispenser and pump assembly of Figure 1 with the piston in a fully withdrawn portion;
Figure 3 is a partial cross-sectional side view of the dispenser of Figure 1 but with the piston in a fully retracted portion;
Figure 4 is a perspective view of the piston shown in Figure 1;
Figure 5 is a cross-sectional side view of a second embodiment of a liquid dispenser for the performance of the method; and
Figure 6 is a cross-sectional side view of a third embodiment of a liquid dispenser;
Figure 7 is an enlarged cross-sectional side view of a preferred embodiment of a liquid dispenser showing a cover for use in vacuum evacuation; and
Figure 8 is a partial cross-sectional side view of a piston chamber forming body secured to a rigid container.

### DETAILED DESCRIPTION OF THE DRAWINGS

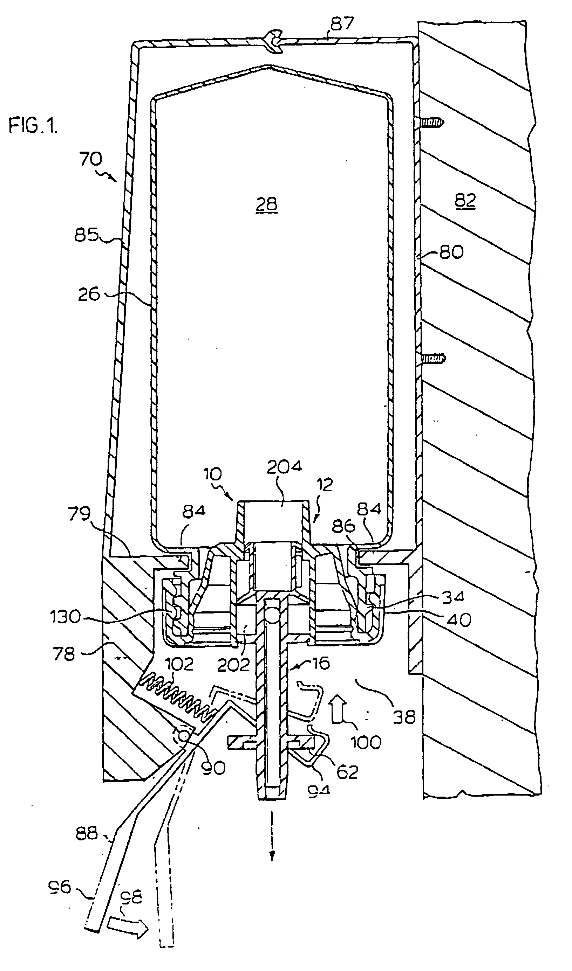

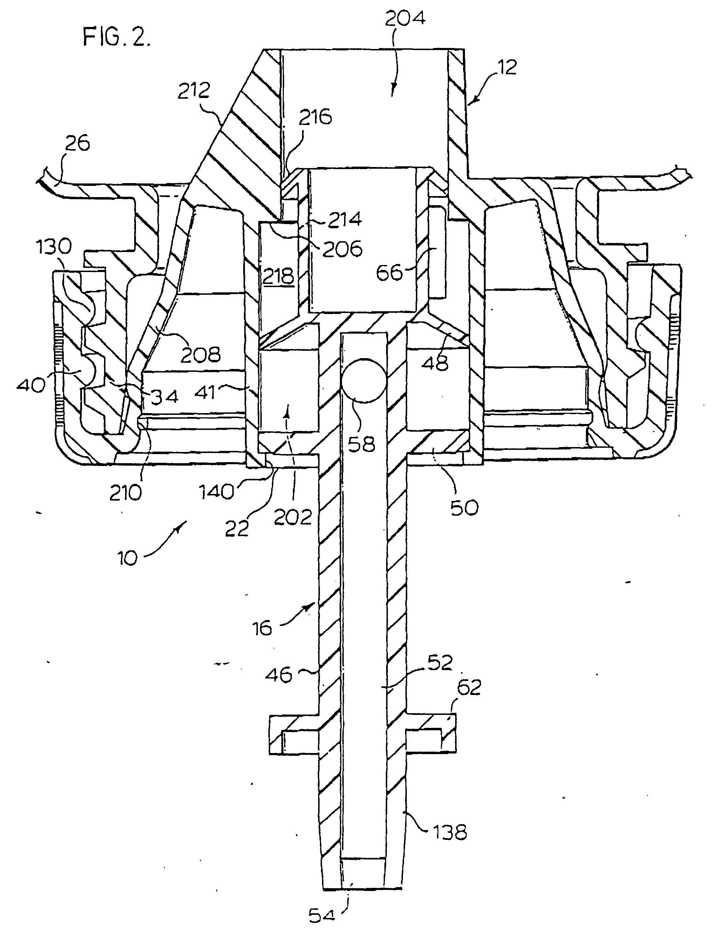

Reference is made first to Figures 1 to 3 which show a pump assembly generally indicated 10. Pump assembly 10 is shown best in Figure 2 as comprising two principle elements, a piston-chamber forming body 12 and a piston 16 seen best in Figure 2.

In essence, body 12 has a stepped cylindrical chamber 18 having an outer cylindrical chamber 202 and an inner cylindrical chamber 204. The inner chamber 204 is of a diameter less than the diameter of the outer cylindrical chamber 202. Each chamber has a cylindrical chamber wall, an inner end and an outer end. The outer chamber 202 and inner chamber 204 are coaxial in the sense of being disposed about the same central axis. The outer and inner chambers 202,204 are axially adjacent each other with the outer end of the inner chamber opening into the inner end of the outer chamber. An annular shoulder 206 closes the inner end of outer chamber 202 about the outer end of the inner chamber.

Piston 16 is axially slidably received in chamber 18 for reciprocal sliding movement inwardly and outwardly of an open end 22 of chamber 18. In the pump assembly 10 shown in Figures 1 to 3, the body 12 not only carries the piston 16 but is secured to a container or reservoir 26, which may be a collapsible or a non-collapsible container, by internal threads 130 on outer cylindrical portion 40 which engage the threaded neck 34 of container 26. With the pump assembly 10 coupled to reservoir 26, reciprocal movement of piston 16 will pump fluid from the reservoir 26 through piston 16.

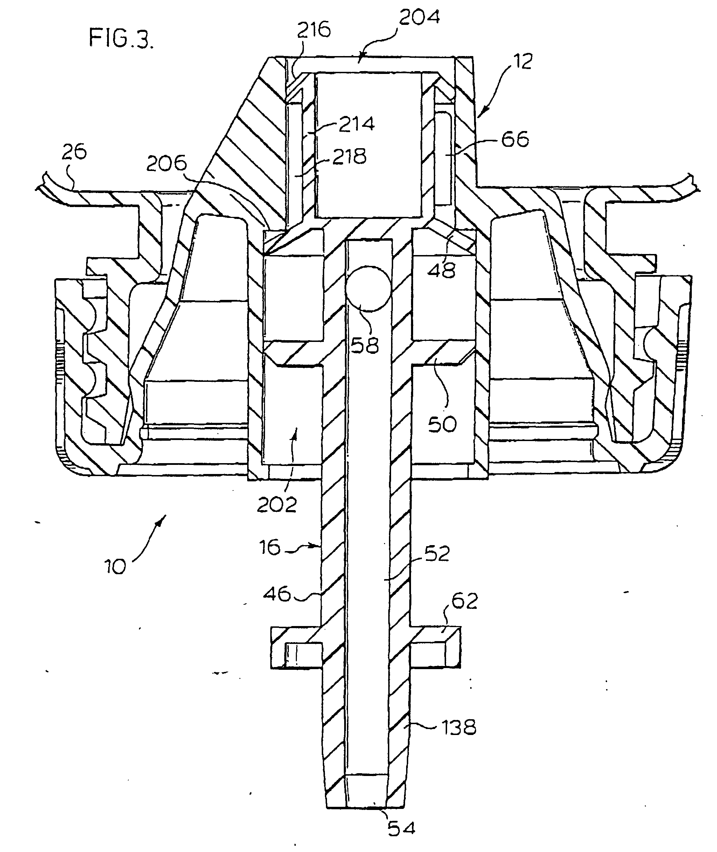

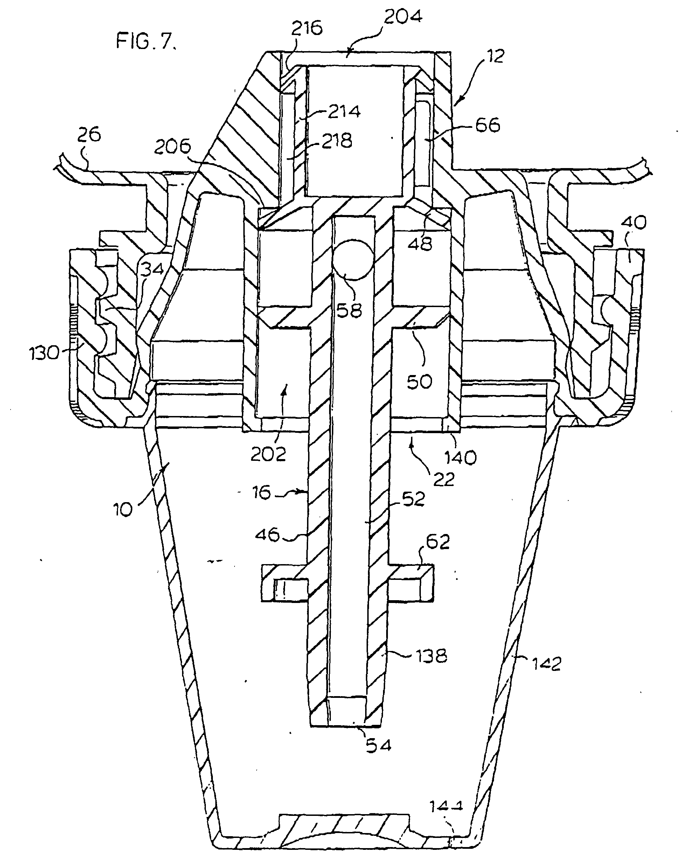

The body 12 is generally clindrical in cross-section and symmetrical about its central axis. The chambers 202 and 204 are defined inside the chamber 18 with an annular wall 208 connecting the outer cylindrical portion 40 to the chamber 18. The wall 208 has circumferential grooves 210 adapted to receive a cover identical to cover 142 shown in Figure 7 as will be described later. The cross-section of body 12 seen in Figures 2 and 3 shows one of a plurality of thin, radially outwardly extending reinforcing flange 212 to assist in supporting the inner chamber 204.

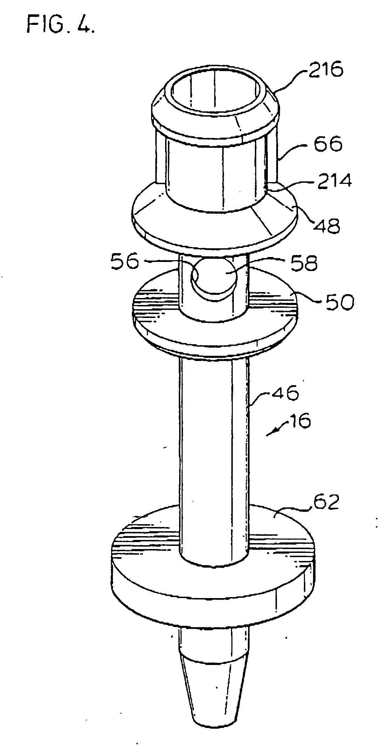

As shown best in Figures 3 and 4, piston 16 is generally cylindrical in cross-section and adapted to be slidably received in chamber 18. Piston 16 is a unitary element formed entirely of plastic preferably by injection molding. Piston 16 has a central hollow stem 46 extending along the central longitudinal axis of the piston 16.

Piston 16 includes an inner cylindrical extension 214 to the stem 46 carrying at its inner end an annular inner flexing disc 216. The inner extension 214 and inner flexing disc 216 are adapted to be received within the inner chamber 204. Inner flexing disc 216 is circular and extends radially outwardly from stem extension 214 with an elastically deformable edge portion engaging the chamber wall of the inner chamber 204 circumferentially thereabout.

A circular resilient flexing disc 48 having an elastically deformable edge is located towards the inwardmost end of the piston 16 and extends radially therefrom. The flexing disc 48 is located along the piston 16 outwardly from the inner flexing disc 216 and is adapted to be received in the outer chamber 202. Outer flexing disc 48 is circular, sized to circumferentially abut the chamber wall of the outer cylindrical chamber 202 substantially preventing fluid flow therebetween.

The inner flexing disc 216 interacts with inner chamber 204 in the same manner that outer flexing disc 48 interacts with outer chamber 202. Each substantially prevents fluid flow in their respective chamber past the flexing disc in an inward direction. Each permits fluid flow in their respective chamber past the flexing disc in an outward direction by elastically deforming away from their respective chamber wall.

A circular sealing disc 50 is located on the stem 46 spaced axially outwardly from the oter flexing disc 48. The sealing disc 50 extends radially outward from the stem 46 to circumferentially engage the outer chamber wall to form a substantially fluid impermeable seal therebetween. Sealing disc 50 is formed sufficiently rigid so as to resist deformation, maintaining a substantially fluid impermeable seal with the chamber wall on sliding the piston 16 in and out of the chamber 18.

As best seen in Figure 2, piston stem 46 has a central hollow passage 52 extending along the axis of the piston 16 from an inner end located in the stem 46 between the flexing disc 48 and the sealing disc 50, to an outlet 54 at the outer end of the piston 16. A channel 56 passes from inlets 58 located on either side of the stem 46 between the fixing disc 48 and the sealing disc 50, radially inward through the piston 16 to communicate with central passage 52. The channel 56 and central passage 52 permit fluid communication through the piston 16 past the sealing disc 50, between the inlets 58 and the outlet 54.

An outer circular engagement flange 62 is provided towards the outermost end of the stem 46 which extends radially outwardly from about the outlet 54. As discussed later, flange 62 may be engaged by an actuating device in order to move the piston 16 in and out of the body 12.

As seen best in Figure 2, annular rim 140 is provided to engage sealing disc 50 and limit full outward movement of piston 16 in normal pumping operation. As shown in Figure 3, the engagement of annular shoulder 206 by outer flexing disc 48 preferably limits full inward movement of piston 16 in normal pumping operation.

Although not shown in the embodiment of Figures 1 to 4, a circular stopping disc may also be provided on the stem 46 between the flange 62 and the sealing disc 50 extending radially outward from the stem 46. The stopping disc having a radius greater than the radius of the chamber 18 such that the stopping disc limits inward movement of piston 16 by its abutment with the outer end of the chamber 18.

Operation of the pump assembly 10 is now described with reference to Figure 2 showing piston 16 in a fully outward, withdrawn position and Figure 3 showing piston 16 in a fully inward, retracted position, between which positions the piston 16 is reciprocated in pumping. As is known to persons skilled in the art, the volume 218 of fluid in chamber 18 between inner flexing disc 216 and outer flexing disc 48 varies with axial movement of piston 16. In Figure 2, this volume 218 is a maximum in that the outer flexing disc 48 is axially located farthest outwardly in the larger diameter outer chamber 202. In Figure 3, this volume 218 is a minimum in that the outer flexing disc 48 is axially located farthest inwardly in outer chamber 202.

In piston 16 moving inwardly from the withdrawn position of Figure 2 to the retracted position of Figure 3, the volume for the fluid between the two flexing discs decreases, placing such trapped fluid under increased pressure in that inner flexing disc 216 acts as a one-way valve to prevent flow of fluid inwardly past it in inner chamber 204. As a result of this increased pressure, outer flexing disc 48 deflects radially inwardly at its periphery so as to come out of sealing contact with the chamber wall permitting flow of fluid outwardly past it in outer chamber 202 and, subsequently, out outlet 54 via passageway 52.

In piston 16 moving outwardly from the retracted position of Figure 3 to the withdrawn position of Figure 2, the volume 218 for the fluid between the two flexing discs increases, placing the fluid therebetween under reduced pressure in that outer flexing disc 48 acts as a one-way valve to prevent flow of fluid inwardly past it in outer chamber 204.

Repeated pumping action results by repeatedly cycling the pump assembly 16 through the positions in sequence from Figure 2 to Figure 3, then return to Figure 2.

The flexing disc 48 needs, on one hand, to substantially prevent flow therepast in the withdrawal stroke and, on the other hand, deform to permit flow therepast in the return stroke. The disc 48 shown facilitates this by being formed as a thin resilient disc, in effect, having an elastically deformable edge portion near chamber wall.

When not deformed, flexing disc 48 abuts the outer chamber wall to form a substantially fluid impermeable seal. When deformed, as by its edge portion being bent away from wall, fluid may flow past the disc. Disc 48 is deformed when the pressure differential across it, that is, the difference between the pressure on one side and pressure on the other side, is greater than a maximum pressure differential which the disc can withstand without deflecting. When the pressure differential is greater than this maximum pressure differential, the disc 48 deforms and fluid flows past. When the pressure differential reduces to less than this maximum pressure differential, the disc 48 returns to its original shape substantially forming a seal with the outer chamber wall.

As is to be appreciated, inner flexing disc 216 is formed on essentially the same principles as outer flexing disc 48, only so as to deform away from the inner chamber wall to permit fluid flow therepast on the withdrawal stroke.

With simple discs 48,216 of thin plastic as shown, the overall configuration of the pump assembly needs to be considered to achieve best results. For example, in a withdrawal stroke, the resistance of fluid flow into chamber 18 past the inner flexing disc 216 compared to the resistance to fluid flow back up channel 56 and passage 52 will affect the relative pressures on each side of the disc 48 and whether the disc 48 will be deflected. Preferably, the pump assembly is to be designed having regard to the viscosity of the fluid, the resistance to flow outwardly past the inner flexing disc 216 and the resistance to flow back inwardly through the piston 16 as well as the relative resiliency of the disc 48 so that in operation, only flexing disc 216 permits fluid flow therepast in the outward stroke, and only flexing disc 48 permits fluid flow therepast in the return stroke.

The inner flexing disc 216 together with the stepped, two-diameter cylinder configuration of chamber 18, in effect, provide an inner one-way valve structure serving the function of one-way valve which permits only outward flow of fluid 28 from the reservoir 26 into the chamber 18.

Discs 48,216 may be designed to resist deformation in one direction compared to the other so as to assist in achieving the desired operation.

Reference is now made to Figure 1 which shows a liquid soap dispenser generally indicated 70 utilizing pump assembly 10 and reservoir 26 with pump assembly 10 inserted into neck 34 of reservoir 26. Dispenser 70 has a housing generally indicated 78 to receive and support the pump assembly 10 and reservoir 26. Housing 78 is shown with a back plate 80 for mounting the housing, for example, to a building wall 82. A bottom support plate 84 extends forwardly from the back plate to receive and support the reservoir 26 and pump assembly 10. As shown, bottom support plate 84 has a circular opening 86 therethrough. The reservoir 26 sits, supported on plate 79 with its neck 34 extending through opening 86 and secured in the opening as by friction fit, clamping and the like. A cover member 85 is hinged to an upper forward extension 87 of back plate 80, so as to permit replacement of reservoir 26 and its pump assembly 10.

Bottom plate 84 carries at a forward portion thereof an actuating lever 88 journalled for pivoting about a horizontal axis at 90. An upper end of lever 88 carries a hook 94 to engage engagement flange 62 and couple lever 88 to piston 16, such that movement of the lower handle end 96 of lever 88 from 88 the solid to the dotted line position, in the direction indicated by arrow 98 slides piston 16 inwardly in a return, pumping stroke as indicated by arrow 100. arrow 100. On release of lower handle end 96, spring 102 biases the upper portion of lever 88 downwardly so that the lever 88 draws piston 16 outwardly to a fully withdrawn position as seen in solid lines in Figure 1. Lever 88 and its and inner hook 94 are adapted to permit manually coupling and uncoupling of the hook 94 as is necessary to remove and replace reservoir 26 and pump assembly 10.

In use of the dispenser 70, once exhausted, the empty reservoir 26 together with its attached pump 10 are removed and a new reservoir 26 and attached pump 10 are inserted into the housing. Preferably, the removed reervoir 26 and attached pump 10 is made entirely of recyclable plastic material which may easily be recycled without the need for disassembly prior to cutting and shredding.

Figures 1 to 4 show a plurality of webs 66 provided on inner extension 214 to slidably engage the chamber wall of inner chamber 204 and assist in centering and axially aligning piston 16 in chambers 202 and 204. As is to be appreciated, such webs 66 are not necessary but may advantageously be provided. Webs 66 have been shown as axially extending radial flanges, however, many other forms of such locating members may be provided, for example, as a disc similar to disc 50 but having substantial openings therethrough or discontinuities therein.

Axially extending webs 66 and/or circumferential ribs may also be provided to extend radially from stem 46 to engage the outer chamber wall and assist in maintaining the piston 16 in an axially centered and aligned position when sliding in and out of the chamber 18.

While the preferred embodiment of Figures 1 to 4 show a plastic cylindrical piston-chamber 12 and piston 16, piston-chambers and pistons of other symmetrical and non-symmetrical shapes and materials may also be used.

Although a piston-chamber 12 having threads 36 is preferred, other gripping means, including an outer cylindrical portion 40 having gripping means, including an outer cylindrical portion 40 having gripping flanges could also be provided on the piston-chamber 12 or elsewhere.

While the preferred embodiment of Figures 1 to 4 shows a channel 56 passing from an inlet 58 on the stem 46 of the piston 16 and connecting with an axially aligned central passage 52, the channel 56 could also be provided permitting fluid communication outward past the sealing disc 50 without connecting with a central passage and without an inlet 58 disposed on the stem 46 of the piston 16.

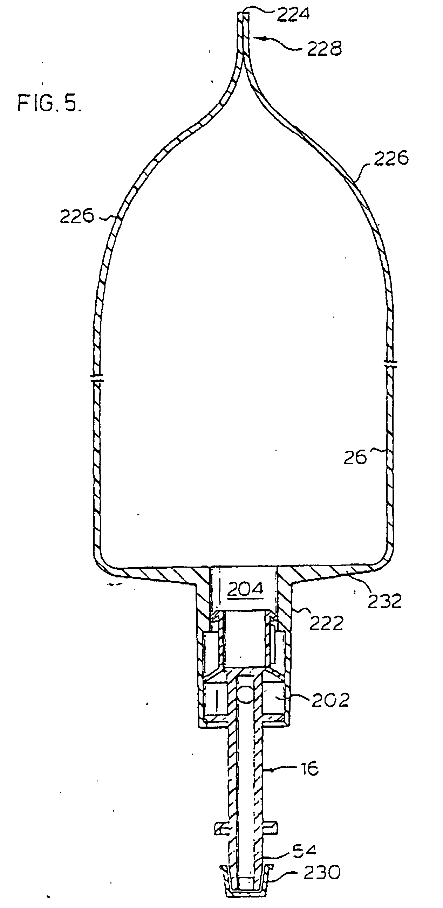

Reference is now made to Figure 5 which shows a second modified form of the pump assembly of Figures 1 to 3. In Figure 5, piston 16 is identical to the piston in Figures 1 to 4. The container 26 in Figure 5 is aunitary element integrally formed as one piece with the piston-chamber forming body 12. The neck 222 of container 26 has stepped interior cylindrical surfaces forming the outer chamber 202 and inner chamber 204 to otherwise be identical to that as shown in Figures 1 to 3. Operation of the pump in Figure 5 is identical to that in Figures 1 to 3.

The pump assembly of Figure 5 is particularly advantageous when container 26 is collapsible. In this regard, Figure 5 is intended to illustrate a collapsible container 26 of plastic material similar to known tubes for dispensing fluids such as toothpaste. Container 26 may be formed from plastic by known extrusion, injection molding and/or blowing molding techniques to have an initially open innermost end 224. After the container 26 is filled with fluid, the side walls 226 of the container are then sealed together at seal 228 forming a straight seal extending across the container 26 completely from one side to the other to close the innermost end 224 in a known manner. In this sense, the sealed container 26 is not symmetrical about its central axis proximate end 224. A removable cap 230 is provided to close outlet 54. The unit as illustrated in Figure 5 may be sold filled with liquid and function by itself when manually manipulated without the need for any housing, actuators or springs. A user may hold the container 26 with one hand and, with the other, slide the piston 16 inwardly and outwardly to dispense fluid as required.

Container 26 is shown with its neck 222 and a circular dispensing flange 232 of increased thickness to provide relative rigidity and strength compared to the relatively thin collapsible side walls 226.

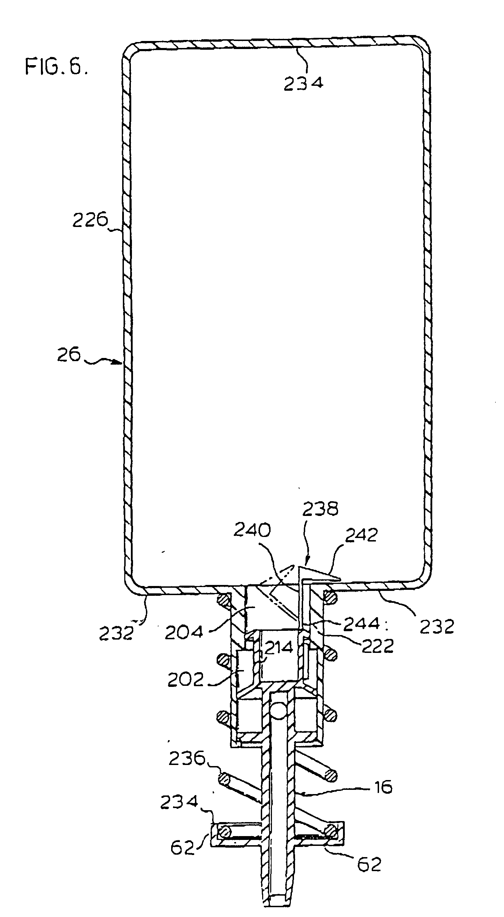

Reference is now made to Figure 6 which shows a modified form of the pump assembly of Figures 1 to 3 and most similar to the assembly of Figure 5. In Figure 6, container 26 is substantially the same as that in Figure 5 with the piston chamber forming body integral with the container 26. The container 26 is preferably cylindrical container having cylindrical side walls 226 and a circular end wall 234 and formed to be relatively rigid as by being formed from materials such as relatively rigid plastic or glass.

Piston 16 is substantially identical to the piston in Figures 1 to 4 with two differences. Firstly, engagement flange 62 is enlarged to have a greater radial extent and to have annular side flange 234. Side flange 234 assists in retaining helical spring 236 between engagement flange 62 and the depending flange 232 about container neck 222. Such spring 236 biases the piston 16 to the fully withdrawn position. The spring may be formed of metal, although preferably, is a resilient nylon or plastic spring which may be ground and recycled.

Secondly, a flexible catch 238 is provided, preferably as an inegral part of piston 16 but possibly as a seaprate plastic part secured thereto. Th flexible catch 238 is shown as an integral part of piston 16 extending inwardly from inner extension 214 as an elongate arm 240 having a catch foot 242 to engage inwardly of the depending flange 232 to more positively prevent movement of piston 16 outwardly beyond the fully withdrawn position shown. Arm 240 is shown with a reduced protion 244 about which the flexible catch may bend to assume the inactive position, the piston 16 may be inserted into the container 26 and, thereafter, the catch inherently assumes the position shown in solid lines. Insofar as it may prove necessary, a one-way valve (not shown) may be provided to prevent a vacuum from being created in the container which could prevent pumping of fluid therefrom.

Reference is now made to Figure 7 which shows an embodiment of a pump having a body 12 and piston 16 substantially identical to the body and piston in Figures 1 to 4. In Figure 7, similar reference numerals are used to indicate similar elements to those in the first aspect of the invention shown in Figures 1 to 4.

As seen in Figure 7 the pump assembly 10 is identical in functionality to that in Figure 1. Pump assembly 10 is shown secured to a collapsible plastic container 26 having a threaded neck 34. The pump assembly 10 has body 12 and piston 16. Body 12 is configured with internal 130 on outer cylindrical portion 40 for screwing the body onto threaded neck 34.

The piston 16 is identical to that in Figure 4 having stem 46 carrying flexing discs 48,216, sealing disc 50 and webs 66. The stem 46 has passage 52, outlet 54, and inlet 58. Stem 46 extends outwardly as a relatively narrow tube 138 suitable for dispensing fluid. Operation of the pump assembly 10 of Figure 7 is similar to the pump assembly of Figures 1 to 6.

Body 12 is provided at the open end 22 of chamber 18 with an annular rim 140 which extends radially inwardly from the cylindrical walls of the chamber a small extent and presents an axially inwardly directed annular shoulder. This annular rim 140 serves as a stop against which sealing disc 50 abuts to limit axial outward movement of piston 16. The size of rim 140 and the relative resiliency and shape of sealing disc 50 may be selected to permit disc 50 to flex and snap inwardly past rim 140 for easy insertion and to flex and snap outwardly past rim 140 for removal under forces greater than normally to be applied in normal pumping operation of the pump.

Figure 7 also shows a cover 142 which fits in a snap engagement onto body 12 forming an airtight annular seal thereabout. A small hole 144 is provided in the top of cover 142.

In use, in accordance with a method of evacuation of the present invention, the container 26 is substantially filled with viscous material such as soap or a hand cream or the like. The pump assembly 10 and cover 142 are then applied. With the container preferably in a vertical position and the cover 142 oriented upwardly, a vacuum is applied to hole 144 in the cover 142 which draws air out of the container in that both the sealing disc 216 and flexing disc 48 can deflect to permit gas to pass outwardly under the vacuum. When all the air is withdrawn, the soap-like liquid comes to contact the sealing disc 216. The vacuum pressure required to draw the soap-like liquid past the sealing disc 216 is substantially greater than the pressure required to draw out gas. The vacuum pressure is selected to be a pressure which will easily draw out the gas but is insufficient to draw out the gas but is insufficient to draw out the liquid.

The operation of the pump shown in Figure 7 is as previously described wherein a reduced pressure caused by the withdrawal of the piston 16 causes sealing disc 216 to deflect away from the chamber wall and fluid to flow into chamber 18 past the sealing disc 216. In the withdrawal stroke, flexing disc 48 remains substantially undeflected and assists in creating suction forces in chamber 18 to deflect the sealing disc 216 and draw fluid therepast.

As is in the previous embodiments shown in Figures 1 to 3, the return of piston 16 pressurizes fluid in chamber 18 between the piston and sealing disc 216. This pressure urges the sealing disc 216 to a closed position abutting the side walls of the inner chamber 204. As a result of this pressure, flexing disc 48 deflects its periphery in the manner as that in Figures 1 to 3, so as to come out of sealing engagement with outer chamber wall and permit fluid to flow past disc 48 and out of chamber 18 via passage 52 and channel 56 and passage 52.

Advantages of such a liquid filled evacuated container include:
1. improved drop strength;
2. longer shelf life for degradable products because oxygen in the air is withdrawn;
3. the pump assembly is primed and delivers product on the first pumping of the piston;
4. air pockets are eliminated which, during later use, can enter the pump assembly and temporarily prevent flow of soap from the outlet during pumping which could make a user believe that the container is empty of soap when it is not.

The particular configuration of the pump assembly is not critical for use in gas evacuation under vacuum. The pump assembly needs to be configured merely so that when a vacuum is being applied, there are one-way valve systems which permit air to be drawn out of the container at a lower vacuum pressure yet requires a substantially higher vacuum pressure to permit the soap to be drawn out past one of the one-way valves.

The piston 16 does not need to be in place to evacuate the air from the container.

The cover 142 is also not essential and a removable vacuum housing could be applied over the body 12 to apply the vacuum. However, it is greatly preferred that some sort of cover be provided particularly with the cover having a hole 144 through which the vacuum can be applied.

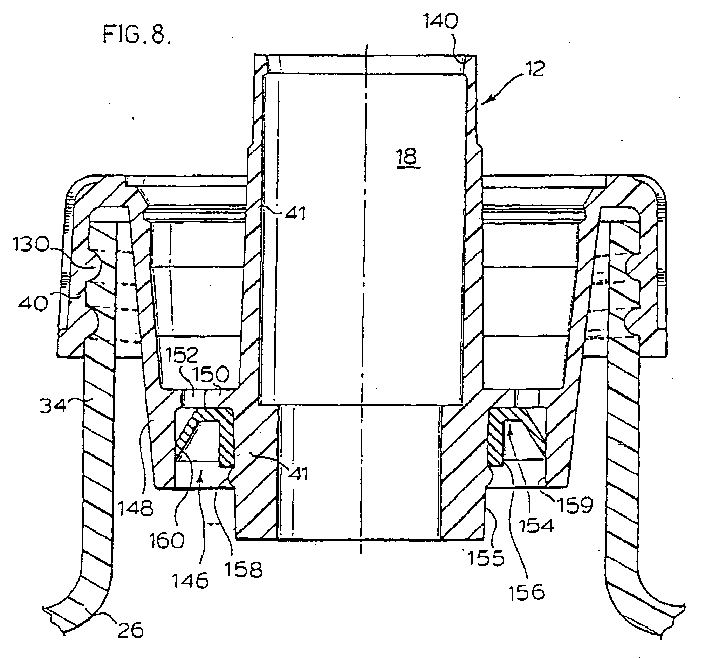

Reference is now made to Figure 8 which shows a form of the body 12 illustrated in Figures 1 to 3 and 5 to 7 modified to show another aspect. The body 12 in Figure 8 is essentially identical to the body in Figures 1 to 3 with the exeption that an annular groove 146 is provided between inner cylindrical portion 41 and an outer wall 148. The annular bottom 150 of groove 146 has a number of openings 152 therethrough. A resilient flexible annular seal ring 154 is provided secured in groove 146 against its inner side wall 155 by a radially inner major arm 156 of the ring engaging a shoulder on radially outwardly extending boss 158. An outer arm 160 of seal ring 156 engages the outer wall 159 of grooge 146 and is adapted to flex radially inwardly to form a one-way valve. This one-way valve structure of Figure 8 is adapted to permit use of the pump assembly 10 of Figures 1 or 6 with a rigid non-collapsible container 26 whose neck is only partially shown in Figure 8.

In use with the bottle inverted, on pumping soap from the non-collapsible container 26, a vacuum comes to be created in the container which would, if not decreased, prevent further pumping. The annular seal ring 154 functions by deflection of outer arm 160 to permit air to enter the container via openings 152 when a vacuum is created in the container. The seal ring 154 prevents flow of liquid out of the container via openings 152.

As is to be appreciated, the annular seal ring 154 may be made of any suitable flexible material including plastic, rubber or nylon, but is preferably formed from the same material as body 12 and piston 16 so as to facilitate recycling.

While Figure 8 is described with reference to the aspect shown in Figures 1 to 3, it is to be apparent that the sealing ring 154 and corresponding modifications to the pump assembly could equally be incorporated in soap dispensers which use more conventional pump assemblies.

## Claims

1. A method of preparing a replaceable fluid reservoir (26) wherein said reservoir (26) has coupled thereto an assembly (10) including,
a chamber-forming element (12) having a chamber (202,204), said chamber having chamber wall, an outer open end and an inner end in fluid communication with said reservoir (26), and
one-way valve means (48,216) disposed across said chamber (202,204) permitting liquid flow therepast through the chamber only from the reservoir outwardly towards the outer open end (22), said one-way valve means (12) only permitting air to be drawn outwardly therepast towards the outer open end under vacuum pressure across the one-way valve means further below atmospheric pressure than a first negative pressure and only permitting liquid to be drawn outwardly therepast under vacuum pressure across the one-way valve means further below atmospheric pressure than a second negative pressure, the second negative pressure being further below atmospheric pressure than said first negative pressure,
said method comprising the steps of:
substantially filling said reservoir (26) with liquid, and evacuating air from said reservoir by applying a vacuum from an external source of vacuum to a portion of said chamber (202,204) which is spaced outwardly from said one-way valve means (48,216),
said vacuum providing vacuum pressure across the one-way valve means between said first negative pressure and said second negative pressure.

2. A method as claimed in claim 1 wherein said assembly (10) has coupled thereto a cover member (142), said cover member having an aperture (144) formed therethrough and an edge portion of said cover member sealingly joined to said assembly (10) about the outer end (22) of the chamber (202,204),
wherein said reservoir (26) is evacuated by applying said vacuum to said aperture (142).

3. A method as claimed in any preceding claim wherein said assembly (10) includes a piston forming element (16) configured to be slidably received in the chamber (202,204), and wherein axially inward and outward sliding of said piston forming element in said chamber dispenses said liquid from the reservoir;
said method further comprising the step of inserting said piston forming element (16) into said chamber prior to said step of evacuating air from said reservoir.

4. A method as claimed in any preceding claim wherein said chamber wall is cylindrical, said one-way valve means comprises at least one flexing disc (48,216) supported on a stem (52) coaxially disposed within the cylindrical chamber wall,
each flexing disc (48,216) extending radially outwardly from the stem (52) to proximate the chamber wall circumferentially thereabout,
each flexing disc substantially preventing liquid flow in the chamber past the flexing disc inwardly towards the reservoir (26),
each flexing disc elastically deforming away from the chamber wall of the chamber to permit liquid flow in the chamber past the flexing disc outwardly.

5. A method as claimed in claim 3 wherein the piston forming element (16) having an axially extending stem (52), the one-way valve means comprises at least one flexing disc (48,216) supported on the stem (52) extending radially outwardly from the stem to engage the chamber wall circumferentially thereabout,
each flexing disc substantially preventing liquid flow in the chamber past the flexing disc inwardly towards the reservoir (26),
each flexing disc elastically deforming away from the chamber wall of the chamber to permit liquid flow in the chamber past the flexing disc outwardly.

6. A method as claimed in claim 4 or 5 wherein each flexing disc (48,216) has an elastically deformable edge potion for engagement with the chamber wall circumferentially thereabout.

7. A method as claimed in claim 3 wherein said chamber wall is cylindrical, the piston forming element (16) having an axially extending stem, said one-way valve means comprises at least two flexing discs (48,216) supported on a stem (52) axially spaced from each other coaxially disposed within the cylindrical chamber wall,
each flexing disc (48,216) extending radially outwardly from the stem (52) to proximate the chamber wall circumferentially thereabout,
each flexing disc substantially preventing liquid flow in the chamber past the flexing disc inwardly towards the reservoir (26),
each flexing disc elastically deforming away from the chamber wall of the chamber to permit liquid flow in the chamber past the flexing disc outwardly.

8. A method as claimed in any preceding claim wherein said liquid comprises a viscous liquid.

9. A method as claimed in any preceding claim wherein said liquid comprises liquid soap.

10. A method as claimed in claim 1 wherein said vacuum pressure is applied across said outer open end of said chamber by provision of a removable vacuum housing.

11. A method as claimed in any preceding claim wherein said assembly (10) and one-way valve means (48,216) comprise elements of a pump assembly (10) which when activated dispenses liquid from said reservoir.

## Patentansprüche

1. Ein Verfahren zum Präparieren eines auswechselbaren Fluidreservoirs (26), wobei mit dem besagten Reservoir (26) eine Anordnung (10) verbunden ist, enthaltend:
ein kammerbildendes Element (12) mit einer Kammer (202,204), wobei die besagte Kammer eine Kammerwandung, ein äußeres, offenes Ende und ein inneres, mit dem besagten Reservoir (26) in Flüssigkeitsverbindung stehendes Ende aufweist, und
in der besagten Kammer (202,204) angeordnete Einweg-Ventilmittel (48,216), welche einen Flüssigkeitsstrom durch die Kammer daran vorbei nur von dem Reservoir nach außen zu dem äußeren, offenen Ende (22) hin erlauben, wobei die besagten Einweg-Ventilmittel (12) eine Luftbeförderung nach außen daran vorbei zu dem äußeren, offenen Ende hin nur bei einem Unterdruck an den Einweg-Ventilmitteln erlauben, welcher weiter unterhalb des atmosphärischen Drucks als ein erster Unterdruck ist, und eine Flüssigkeitsbeförderung nach außen daran vorbei nur bei einem Unterdruck an den Einweg-Ventilmitteln erlauben, welcher weiter unterhalb des atmosphärischen Drucks als ein zweiter Unterdruck ist, wobei der zweite Unterdruck weiter unterhalb des atmosphärischen Drucks als der erste Unterdruck liegt,
wobei das besagte Verfahren folgende Verfahrensschritte enthält:
im wesentlichen Füllen des besagten Reservoirs (26) mit Flüssigkeit und Absaugen von Luft aus dem besagten Reservoir durch Erzeugen eines Unterdrucks von einer externen Unterdruckquelle in einem Teil der besagten Kammer (202,204), welcher sich im Abstand außerhalb von den besagten Einweg-Ventilmitteln (48,216) befindet,
wobei der besagte Unterdruck einen Unterdruck an den Einweg-Ventilmitteln erzeugt, welcher zwischen dem besagten ersten Unterdruck und dem besagten zweiten Unterdruck liegt.

2. Ein Verfahren nach Anspruch 1, bei welchem die besagte Anordnung (10) ein damit verbundenes Abdeckteil (142) aufweist, wobei das besagte Abdeckteil eine darin geformte Öffnung (144) aufweist sowie einen Randteil des besagten Abdeckteils, welcher um das äußere Ende (22) der Kammer (202,204) mit der besagten Anordnung (10) abdichtend verbunden ist,
bei welchem das besagte Reservoir (26) durch Erzeugen des besagten Unterdrucks an der besagten Öffnung (142) evakuiert wird.

3. Ein Verfahren nach einem der vorhergehenden Ansprüche, bei welchem die besagte Anordnung (10) ein in der Kammer (202,204) beweglich aufgenommenes, kolbenbildendes Element (16) aufweist, und bei welchem die besagte Flüssigkeit durch eine nach innen und nach außen gerichtete, axiale Bewegung des besagten kolbenbildenden Elements in der besagten Kammer aus dem Reservoir entnommen wird,
wobei das besagte Verfahren weiterhin den Schritt des Einsetzens des kolbenbildenden Elements (16) in die besagte Kammer vor dem Schritt des Luftevakuierens des besagten Reservoirs enthält.

4. Ein Verfahren nach einem der vorhergehenden Ansprüche, bei welchem die besagte Kammerwandung zylinderförmig ist, die besagten Einweg-Ventilmittel zumindest eine an einem koaxial innerhalb der zylinderförmigen Kammerwandung vorgesehenen Stiel (52) vorgesehene, biegsame Scheibe (48, 216) enthalten,
wobei jede biegsame Scheibe (48,216) sich radial nach außen von dem Stiel (52) ersteckt, so daß sie umfangsmäßig an der Kammerwandung angrenzt,
wobei jede biegsame Scheibe einen nach innen zu dem Reservoir (26) hin gerichteten Flüssigkeitsstrom in der Kammer an der biegsamen Scheibe vorbei im wesentlichen verhindert,
wobei jede biegsame Scheibe so elastisch verformbar ist, daß sie von der Kammerwandung der Kammer wegbewegbar ist und einen nach außen gerichteten Flüssigkeitsstrom in der Kammer an der biegsamen Scheibe vorbei erlaubt.

5. Ein Verfahren nach Anspruch 3, bei welchem das kolbenbildende Element (16) einen axial verlaufenden Stiel (52) aufweist und die Einweg-Ventilmittel zumindest eine an dem Stiel (52) vorgesehene, biegsame Scheibe (48, 216) enthalten, welche sich radial nach außen von dem Stiel erstreckt und umfangsmäßig an der Kammerwandung anliegt,
wobei jede biegsame Scheibe einen nach innen zu dem Reservoir (26) hin gerichteten Flüssigkeitsstrom in der Kammer an der biegsamen Scheibe vorbei im wesentlichen verhindert,
wobei jede biegsame Scheibe so elastisch verformbar ist, daß sie von der Kammerwandung der Kammer wegbewegbar ist und einen nach außen gerichteten Flüssigkeitsstrom in der Kammer an der biegsamen Scheibe vorbei erlaubt.

6. Ein Verfahren nach Anspruch 4 oder 5, bei welchem jede biegsame Scheibe (48,216) einen am Umfang vorgesehenen, elastisch verformbaren Randteil zum Anliegen an der Kammerwandung aufweist.

7. Ein Verfahren nach Anspruch 3, bei welchem die besagte Kammerwandung zylinderförmig ist, das kolbenbildende Element (16) einen axial verlaufenden Stiel aufweist und die besagten Einweg-Ventilmittel zumindest zwei an einem Stiel (52) vorgesehene, biegsame Scheiben (48, 216) enthalten, welche sich in einem Abstand von einander befinden und koaxial in der zylinderförmigen Kammerwandung vorgesehen sind,
wobei jede biegsame Scheibe (48,216) sich radial nach außen von dem Stiel (52) erstreckt und umfangsmäßig an der Kammerwandung anliegt,
wobei jede biegsame Scheibe einen nach innen zu dem Reservoir (26) hin gerichteten Flüssigkeitsstrom in der Kammer an der biegsamen Scheibe vorbei im wesentlichen verhindert,
wobei jede biegsame Scheibe so elastisch verformbar ist, daß sie von der Kammerwandung der Kammer wegbewegbar ist und einen nach außen gerichteten Flüssigkeitsstrom in der Kammer an der biegsamen Scheibe vorbei erlaubt.

8. Ein Verfahren nach einem der vorhergehenden Ansprüche, bei welchem die besagte Flüssigkeit eine zähflüssige Flüssigkeit enthält.

9. Ein Verfahren nach einem der vorhergehenden Ansprüche, bei welchem die besagte Flüssigkeit eine flüssige Seife enthält.

10. Ein Verfahren nach Anspruch 1, bei welchem der besagte Unterdruck an dem besagten äußeren, offenen Ende der besagten Kammer durch Vorsehen eines entfernbaren Vakuumgehäuses erzeugt wird.

11. Ein Verfahren nach einem der vorhergehenden Ansprüche, bei welchem die besagte Anordnung (10) und die Einweg-Ventilmittel (48,216) Elemente einer Pumpenanordnung (10) enthalten, welche im aktivierten Zustand eine Flüssigkeit aus dem besagten Reservoir entnimmt.

## Revendications

1. Procédé destiné à préparer un réservoir de fluide susceptible d'être remplacé (26) pour lequel ledit réservoir (26) est relié à un assemblage (10) comprenant,
un élément formant une chambre (12) munie d'une chambre (202,204), ladite chambre présentant une paroi de chambre, une extrémité ouverte extérieure et une extrémité intérieure communiquant par le biais du fluide avec ledit réservoir (26), et
des moyens de soupape unidirectionnelle (48,216) disposés dans ladite chambre (202,204) permettant au liquide de traverser la chambre en passant devant eux, seulement en partant du réservoir en direction de l'extérieur, en se dirigeant vers l'extrémité ouverte extérieure (22), lesdits moyens de soupape unidirectionnelle (12) permettant à l'air d'être transporté vers l'extérieur en passant devant eux en se dirigeant vers l'extrémité ouverte extérieure, seulement en cas de dépression au niveau des moyens de soupape unidirectionnelle considérée en outre comme première dépression inférieure à la pression atmosphérique, et permettant au liquide d'être transporté vers l'extérieur en passant devant eux, seulement en cas de dépression au niveau des moyens de soupape unidirectionnelle considérée en outre comme seconde dépression inférieure à la pression atmosphérique, la seconde dépression se situant en outre plus en dessous de la pression atmosphérique que la première dépression,
ledit procédé comprenant les étapes de procédé suivantes :
remplissage essentiel dudit réservoir (26) de liquide et évacuation de l'air dudit réservoir en générant un vide d'air à partir d'une source de vide d'air externe vers une partie de ladite chambre (202,204) espacée à l'extérieur desdits moyens de soupape unidirectionnelle (48,216),
ledit vide d'air générant une dépression au niveau des moyens de soupape unidirectionnelle se trouvant entre ladite première dépression et ladite seconde dépression.

2. Procédé selon la revendication 1 pour lequel ledit assemblage (10) présente un élément de recouvrement (142) relié à celui-ci, ledit élément de recouvrement présentant une ouverture (144) le traversant ainsi qu'un élément de bord dudit élément de recouvrement qui est relié de façon étanchante audit assemblage (10) autour de l'extrémité extérieure (22) de la chambre (202,204),
pour lequel ledit réservoir (26) est évacué en générant ledit vide d'air au niveau de ladite ouverture (142).

3. Procédé selon l'une des revendications précédentes pour lequel l'assemblage (10) comprend un élément formant un piston (16) configuré de façon à loger dans la chambre (202,204) de façon susceptible de se déplacer, et pour lequel ledit liquide est prélevé du réservoir grâce à un déplacement axial dirigé vers l'intérieur et vers l'extérieur dudit élément formant un piston situé dans ladite chambre,
ledit procédé comprenant l'étape d'insertion de l'élément formant le piston (16) dans ladite chambre avant l'étape d'évacuation de l'air hors dudit réservoir.

4. Procédé selon l'une des revendications précédentes pour lequel ladite paroi de chambre est cylindrique, lesdits moyens de soupape unidirectionnelle comprennent au moins un disque souple (48,216) prévu sur une tige (52) disposée coaxialement à l'intérieur de la paroi de chambre cylindrique,
chaque disque souple (48,216) s'étirant radialement vers l'extérieur de la tige (52) de telle façon qu'il est adjacent circonférentiellement à la paroi de chambre,
chaque disque souple empêchant sensiblement un courant de liquide dirigé vers l'intérieur en direction du réservoir (26) de s'écouler dans la chambre en passant devant le disque souple,
chaque disque souple étant élastiquement déformable de telle façon qu'il est susceptible de s'éloigner de la paroi de chambre de la chambre afin de permettre à un courant de liquide dirigé vers l'extérieur de s'écouler dans la chambre en passant devant le disque souple.

5. Procédé selon la revendication 3 pour lequel l'élément formant le piston (16) présente une tige (52) s'étendant axialement, les moyens de soupape unidirectionnelle comprennent au moins un disque souple (48,216) prévu sur la tige (52) s'étirant radialement vers l'extérieur de la tige et étant adjacent circonférentiellement à la paroi de la chambre,
chaque disque souple empêchant sensiblement un courant de liquide dirigé vers l'intérieur en direction du réservoir (26) de s'écouler dans la chambre en passant devant le disque souple,
chaque disque souple étant élastiquement déformable de telle façon qu'il est susceptible de s'éloigner de la paroi de chambre de la chambre afin de permettre à un courant de liquide dirigé vers l'extérieur de s'écouler dans la chambre en passant devant le disque souple.

6. Procédé selon la revendication 4 ou 5 pour lequel chaque disque souple (48,216) présente un élément de bord susceptible d'être déformé élastiquement destiné à s'appliquer sur la circonférence de la paroi de chambre.

7. Procédé selon la revendication 3 dans lequel ladite paroi de chambre est cylindrique, l'élément formant un piston (16) présente une tige s'étendant axialement, lesdits moyens de soupape unidirectionnelle comprennent au moins deux disques souples (48,216) prévus sur une tige (52) espacés axialement l'un de l'autre et disposés coaxialement à l'intérieur de la paroi de chambre cylindrique,
chaque disque souple (48,216) s'étendant radialement à l'extérieur de la tige (52) de façon à être adjacent circonférentiellement à la paroi de chambre,
chaque disque flexible empêchant sensiblement un courant de liquide dirigé vers l'intérieur en direction du réservoir (26) de s'écouler dans la chambre en passant devant le disque souple,
chaque disque souple étant élastiquement déformable de telle façon qu'il est susceptible de s'éloigner de la paroi de chambre de la chambre afin de permettre au courant de liquide dirigé vers l'extérieur de s'écouler dans la chambre en passant devant le disque souple.

8. Procédé selon l'une des revendications précédentes dans lequel ledit liquide comprend un liquide visqueux.

9. Procédé selon l'une des revendications précédentes dans lequel ledit liquide comprend du savon liquide.

10. Procédé selon la revendication 1 dans lequel ladite dépression est appliquée au niveau de ladite extrémité ouverte extérieure de ladite chambre en prévoyant un boîtier de vide d'air susceptible d'être enlevé.

11. Procédé selon l'une des revendications précédentes dans lequel ledit assemblage (10) et les moyens de soupape unidirectionnelle (48,216) comprennent des éléments d'un assemblage de pompage (10) qui prélève du liquide hors dudit réservoir lorsqu'il est activé.
